Europäisches Patentamt

European Patent Office

Office européen des brevets

(11) Publication number: **0 052 970**
**B1**

(12) **EUROPEAN PATENT SPECIFICATION**

(45) Date of publication of patent specification: **13.03.85**

(21) Application number: **81305269.3**

(22) Date of filing: **06.11.81**

(51) Int. Cl.⁴: **H 02 K 5/16,** F 16 C 35/02,
F 16 C 37/00, H 02 K 15/16

(54) Bearing support arrangement for an electric machine.

(30) Priority: **21.11.80 US 209052**

(43) Date of publication of application:
**02.06.82 Bulletin 82/22**

(45) Publication of the grant of the patent:
**13.03.85 Bulletin 85/11**

(84) Designated Contracting States:
**AT BE CH DE FR GB IT LI LU NL SE**

(56) References cited:
**DE-A-1 463 968
DE-A-1 563 027
FR-A-1 415 898
FR-A-1 498 229
FR-A-2 235 520
FR-A-2 239 613
FR-A-2 279 970
FR-A-2 377 554
US-A-2 685 658
US-A-2 823 962
US-A-2 929 944
US-A-3 165 816**

(73) Proprietor: **Black & Decker Inc.
Drummond Plaza Office Park 1423 Kirkwood
Highway
Newark Delaware 19711 (US)**

(72) Inventor: **Smith, Peter Brooks
1914 Howard Avenue
Tarboro North Carolina 27886 (US)**

(74) Representative: **Kerr, Simonne June et al
European Patent Attorney POTTS, KERR & CO.
13 High Street
Windsor Berkshire SL4 1LD (GB)**

(56) References cited:
**US-A-3 167 672
US-A-3 707 037
US-A-3 717 779
US-A-4 118 644**

Courier Press, Leamington Spa, England.

# Description

This invention relates generally to electric motor actuated devices of the type having an armature shaft which is rotatably supported by bearings mounted in a housing of the device. The invention relates more particularly to an improved bearing support arrangement.

An armature shaft of an electric motor used with devices such as portable, hand held, electrically powered tools is supported at opposite ends of the shaft by sleeve bearings which are mounted in a housing of the device. One example of such a device is a portable electric, hand held drill. The housing for the device has frequently been fabricated of a thermoplastic material which provides various beneficial characteristics. However, a thermoplastic material is a relatively poor conductor of heat and the housing does not readily permit conduction from the armature bearing of heat generated by the frictional engagement between the bearing body and rotating armature shaft. The bearing body is thus susceptible to operating at an elevated temperature and can experience a relatively shortened operating life.

A support body which both supports the sleeve bearing body in the housing and conducts heat from the bearing body is known. This type of bearing support body provides a heat sink for the bearing body. A flow of thermal energy from the bearing body to the support body and the combined cooling of the bearing and support bodies, principally through convection by flowing air, thus permits the bearing to operate at desired temperatures. One such form of bearing support and heat sink is described in United States Patent No. 3824684. Bearing supports of this type depend in large part for the desired cooling effect on the relatively large thermal mass of the support body. In addition to the desired heat conduction and heat dissipation the relatively large mass support body provides a relatively rigid support for the bearing body.

While providing these beneficial characteristics, the heat sink support body also exhibits some other less desirable factors including cost, interface with the housing and structural rigidity. More particularly, these heat sink support bodies are relatively costly in terms of both the quantity of the material required for the support body itself and the cost of fabrication by casting and finishing. Devices of the type employing the heat sink support body are generally made in relatively large production quantities. Unit cost increments for members of the device can be reflected in terms of relatively large dollar amounts in view of large production quantities and thus each incremental increase or decrease in cost can be reflected in relatively large overall increases or decreases for the production quantities involved. The interface between the bearing support body and the thermoplastic housing is also important. The fabrication of prior heat sink support bodies generally requires a careful processing of the support body during fabrication to avoid an asymmetrical body which can result in uneven heating of the body. Such uneven heating causes nonuniform stressing of the body and at times a cracking of the thermoplastic housing. Additionally, while the support body provides a desired rigid support for the bearing, its rigidity can be disadvantageous in that it permits little yield when manufacturing variations occurring in the cavity impede placement of the bearing body therein. Thus, in order to avoid this potential problem, the cylindricity of the cavity in the support body is accurately formed and the cost of the device is increased.

Another form of heat sink which functions both to support and cool the bearing is provided by a plurality of members rather than a single body. The complexity of this multipiece support and heat sink arrangement is undesirable in that the materials, fabrication and assembly thereof become relatively costly and thermal transfer contact surfaces between the members introduces undesired resistances to the conduction of the heat.

U.S. Patent 4,118,644 discloses an electric motor having a housing made up of two separate parts deep drawn from sheet metal. Each part includes a bearing cavity in which a rotor shaft bearing is a press fit. One of the parts comprises an end cover of the motor housing and has an outer cylindrical flange concentric with the bearing cavity and connected thereto by a shoulder segment. The other part includes the body of the motor housing in which the stator is a press fit. The two parts are connected together by the outer flange being a press fit in the body part. Although the end cover provides an inexpensive bearing support, the method of mounting it to the metal motor housing is inappropriate for mounting in a thermoplastic housing of a portable power tool.

German Patent 1 463 968 discloses a small electric motor in which end plates having central cavities supporting the rotor bearings are formed with outer flanges which are mounted inside a cylinder of thermoplastic material of the prolongation of the stator bore. Air control openings are provided in an end plate. However, the method of mounting these end plates inside the stator assembly is inappropriate for mounting an armature shaft having a commutator in the thermoplastic housing of a portable power tool.

Accordingly, it is an object of the present invention to provide a ductile motor armature shaft bearing support which is relatively cheap to manufacture, and to provide a manner of mounting this bearing support effectively in a thermoplastic housing of an electrically actuated device, particularly a portable power tool.

There is provided by the present invention an electrically actuated device, particularly a portable power tool, having an electric motor, the armature shaft of the electric motor being journalled at one end in a bearing supported in a single piece support body made from sheet metal and having integrally formed central, shoulder and collar segments, the collar and central segments extending longitudinally parallel to and concentrically about the axis of the armature shaft with the collar segment spaced radially outwardly from the central segment and the shoulder segment extending transversely to said axis and connecting the ends of the central and collar segments which are closest to the armature, said bearing being received in said central segment, characterized in that said device has a thermoplastic housing having internally thereof and integrally therewith a tubular bridge segment concentric with said axis, said tubular bridge segment including a radially inwardly extending flange with a rib segment extending axially therefrom to define an annular cavity internally of said tubular bridge segment and concentric with said axis, said collar segment engaging in and being supported by said tubular bridge segment with one end of said collar segment engaging in said annular cavity, and means integral with and extending radially inwardly from said tubular bridge segment in axially spaced relation from said annular cavity for retaining said support body in said tubular bridge segment, said support body being retained between said annular cavity and said retaining means, whereby said sheet metal support body functions both to support said bearing and as a heat sink therefor.

Preferably, the bearing support body has a generally mushroom configuration.

In accordance with other more particular features of the invention, a means is provided for inhibiting rotation of the support body in the housing. A plurality of cooling apertures are formed in the body for enabling air flow through the support body and enhancing its cooling.

Cooling of the bearing body is accomplished by the conduction of thermal energy from the bearing body to the heat sink support body. The support body provides a relatively large surface area which is exposed to the flow of cooling air and thus maintains the bearing body at the desired operating temperature. The heat sink support body of the invention is relatively economical in that it is fabricated of a thin walled sheet metal material and is formed by the relatively less expensive sheet metal forming processes. A heat sink support body is thus provided which utilizes a relatively low mass of material and which can be formed at a relatively low cost. The thin walled support body exhibits a ductility which facilitates positioning the bearing body therein when manufacturing deviations from cylindricity occur while at the same time providing a desired rigidity for supporting the bearing and rotating armature shaft. A thin wall additionally eliminates non-uniform heating and any accompanying undesired stresses upon the housing of the device.

The invention will now be described further, by way of example, with reference to the accompanying drawings, in which:—

Fig. 1 is a fragmentary side elevation, partly broken away and partly in section, of a portable electric tool illustrating one embodiment of the present invention;

Fig. 2 is an enlarged fragmentary view of the device of Fig. 1 on the line 2—2 of Fig. 1;

Fig. 3 is a fragmentary view, partly in section, on the line 3—3 of Fig. 2;

Fig. 4 is an end view of the heat sink support body of Fig. 1;

Fig. 5 is a view taken on the line 5—5 of Fig. 4;

Fig. 6 is a section similar to Fig. 5 and illustrates a bearing body positioned in the support body;

Fig. 7 is a fragmentary view of a segment of the bearing support of Fig. 4 illustrating an alternative embodiment of a means for inhibiting rotation of the support in a housing;

Fig. 8 is an enlarged fragmentary view of a segment of the device of Fig. 1 illustrating in detail the engagement between support collar and housing;

Fig. 9 is a section on the line 9—9 of Fig. 8;

Fig. 10 is an enlarged fragmentary view of a segment of the device of Fig. 1 illustrating in detail an alternative engagement between support collar and housing;

Fig. 11 is an enlarged fragmentary view of a segment of Fig. 1 illustrating placement of the support body in the device housing prior to deformation of captivating housing segments;

Fig. 12 is an end view of an alternative embodiment of the heat sink support body of the present invention;

Fig. 13 is a view on the line 13—13 of Fig. 12;

Figs. 14 to 17 are views of the support body of the invention at various stages during the fabrication process; and

Fig. 18 is a side view in section illustrating an alternative embodiment of heat sink support body arrangement.

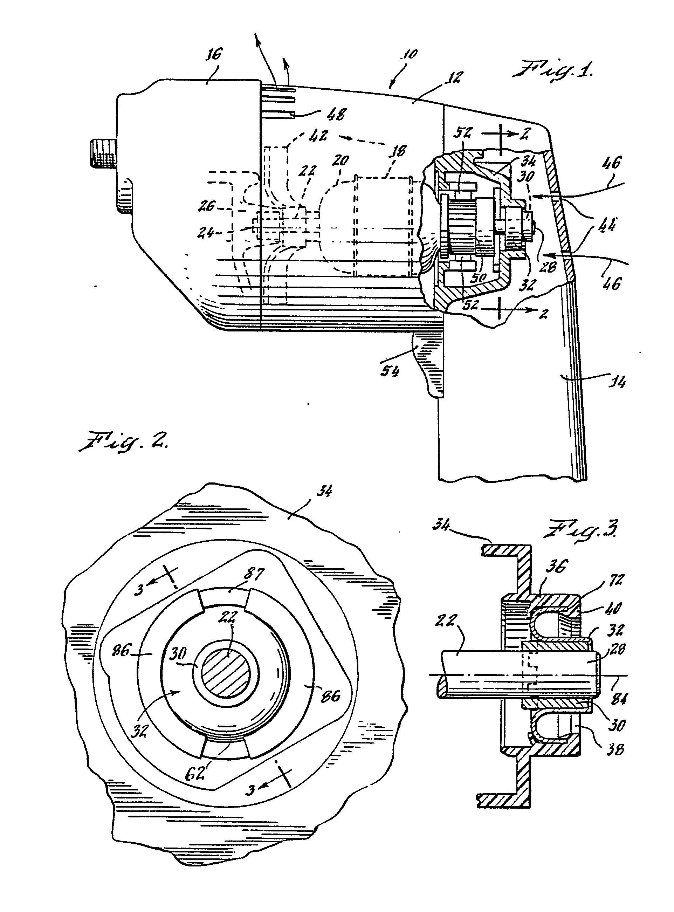

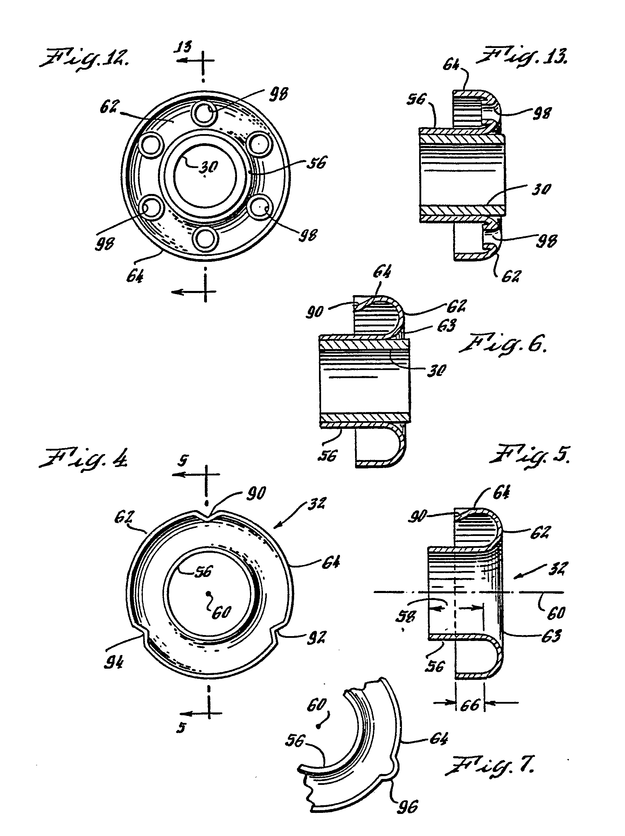

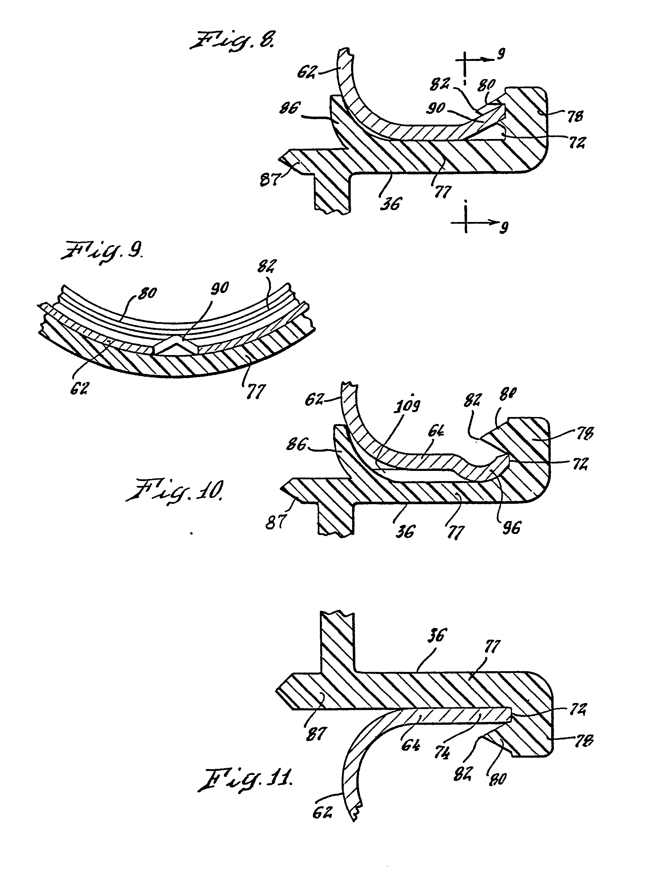

Referring to Figs. 1 to 3, an electrically actuated device with which the present invention is useful is shown to comprise a portable, hand held power tool 10. While the particular power tool 10 illustrated in Fig. 1 is shown to be a portable drill, the tool is exemplary and other forms of electric devices can also make beneficial use of the present invention. The power tool 10 includes a moulded thermoplastic housing 12 having a handle 14 and a gear case 16 which is mounted to the housing. An electric motor 18 is positioned within the housing 12 and includes an armature 20 having a shaft 22. One end 24 of the shaft 22 is supported in a bearing 26 which is mounted in the gear case 16. An opposite end 28 of the shaft 22 is rotatably supported in a sleeve bearing 30 positioned, as indicated in greater detail hereinafter, in a heat sink support body 32 and mounted to a housing bridge segment 34. This bridge segment is formed integrally with the thermoplastic motor housing 12 and includes a tubular shaped segment 36 in which the support body 32 is mounted. The support body 32 extends partly through an aperture 38 formed at one end 40 of the tubular segment 36. A fan 42 is mounted for rotation with the armature shaft 22 near the forward end 24. Upon excitation of the motor 18, the fan rotates to establish a flow of cooling air inwardly through apertures 44 formed in the handle as indicated by the arrows 46, past the bearing and support bodies 30 and 32 respectively and over and through the motor 18. This cooling air is discharged radially through apertures 48 formed near a forward part of the housing 12. As illustrated in Fig. 1, the motor 18 further includes a commutator 50, contact brushes 52 and a trigger switch 54 for control and operation of the power tool 10.

The bridge segment 34 which positions and supports the armature shaft bearing 30 is constructed of the same thermoplastic material as the motor housing 12. Thermoplastics are poor heat conductors and care must be taken to adequately dissipate heat generated at the sleeve bearing 30 resulting from rotary frictional engagement between the end 28 of the armature shaft 22 and the bearing 30. A substantial heat build-up at this bearing, if not dissipated, can soften and distort the thermoplastic bridge segment 34 resulting in a misalignment of the bearing with the armature shaft 22 and cause cumulative heating and wear which shortens the operating life of the tool.

The heat sink support body 32 supports the bearing 30 on the bridge segment 34 of the housing 12. As best illustrated in Figs. 3 to 6, the support body 32 includes an elongated, central segment 56 having a length 58 which extends in the direction of the support body's longitudinal axis 60. A shoulder segment 62 is integrally formed with the central segment 56 and extends transversely therefrom about the axis 60. The support body also includes an elongated collar segment 64, having a length 66, which is integrally formed with the shoulder segment 62 and extends therefrom in the direction of the longitudinal axis 60 and about the central segment 56.

In a preferred embodiment, shown in the drawings, the central segment 56 is symmetrical about the axis 60. The central segment 56 as shown is generally cylindrical and is tubular shaped. The shoulder segment 62 is generally circular shaped; it is symmetrical about the axis 60 and it has a curved or crowned configuration which extends in a direction parallel to the axis 60. The collar segment 64 is generally annular shaped and, as shown comprises a circular or ring shaped segment; it is spaced transversely from the tubular central segment 56 and is concentric therewith. The preferred embodiment of the heat sink support body 32, illustrated in Fig. 5, thus has a generally mushroom shaped configuration. Configurations other than the general mushroom shape can be provided in accordance with the invention. For example, the length of the collar segment 64 may be substantially larger than that illustrated in Fig. 5 and depending on the application, can be equal to or greater than the length 58 of the central segment 56.

The heat sink support body 32 shown is formed of a relatively thin walled material as, for example, sheet metal. While various materials can be utilized, the material preferably exhibits heat transfer characteristics which enable thermal energy generated by the rotating armature shaft in the bearing 30 to transfer from the bearing 30 to the support body 32. Various metals can be utilized and a preferred material is sheet steel. As used herein, the expressions "thin walled" and "sheet metal" refer to a metal sheet having a thickness in the range of not less than about .010 inches (.254 mm) and not greater than about .125 inches (3.175 mm). The thickness of the sheet metal selected within this range will, for a particular application, depend upon the diameters of the central segment 56 and the diameter of the collar segment 64. In a support body 32 with a tubular shaped segment 56 having a diameter of about 1 half inch (12.7 mm) and a collar segment 64 having a diameter of about one inch (25.4 mm), the thin walled material fabricated of sheet steel has a preferred thickness of about .020 inches (.508 mm).

The thin walled support body is conveniently fabricated by sheet metal processes. While the body 32 can be fabricated by a one step forming procedure, the configuration of the body 32 during a sequence of discrete forming steps is illustrated in Figs. 14 to 17. A plate strip of sheet metal stock (not shown) from which the support body 32 is formed is initially stamped to provide a circular disc 100 (Fig. 14) with a relatively well formed outer circular edge 102. The disc 100 is then drawn to form the elongated tubular shaped central segment 56 (Fig. 15). The body of Fig. 15 is then formed to provide the collar segment 54 and the shoulder segment 56 (Fig. 16). At this stage of the fabrication process, the body 32 has a generally top hat configuration as shown in Fig. 16. The central segment 56 is generally tubular shaped with an integral closure 106 at one end. An aperture 105 is then formed in the central segment as is illustrated in Fig. 17. The tubular sleeve bearing 30 which is formed of a suitable, well known, bearing material such as a sintered brass is then pressed into the tubular segment 56, as illustrated in Fig. 6 with entry from the end 63. The support body 32 with bearing 30 positioned therein is then mounted to the bridge segment 34 of the tool housing 12.

Referring now to Figs. 3 and 11, the tubular segment 36 of the bridge 34 is shown to include an inner, integrally formed circular cavity 72 which is adapted to receive and engage a lower segment 74 of the collar segment 64. As best seen in the enlarged view of Fig. 11, the tubular segment 36 includes a wall segment 77, a radially extending segment 78 and a longitudinally extending, annular shaped, rib segment 80 which is integrally formed with and extends from the segment 78. The rib segment 80 is wedge shaped in cross-section and includes a distal crest or point 82. The segments 77, 78 and 80 define the inner, annular shaped cavity 72 of the tubular bridge segment 36. Upon assembly, the support body 32 is initially forced into the tubular segment 36 and the collar edge segment 74 is positioned in engagement with the circular cavity 72. Longitudinal movement of the support member 32 in an axial direction is limited by the segment 78. When so placed, the axis 60 of the support body 32 is concentrically aligned with the axis 84 (Fig. 3) of the armature shaft 22.

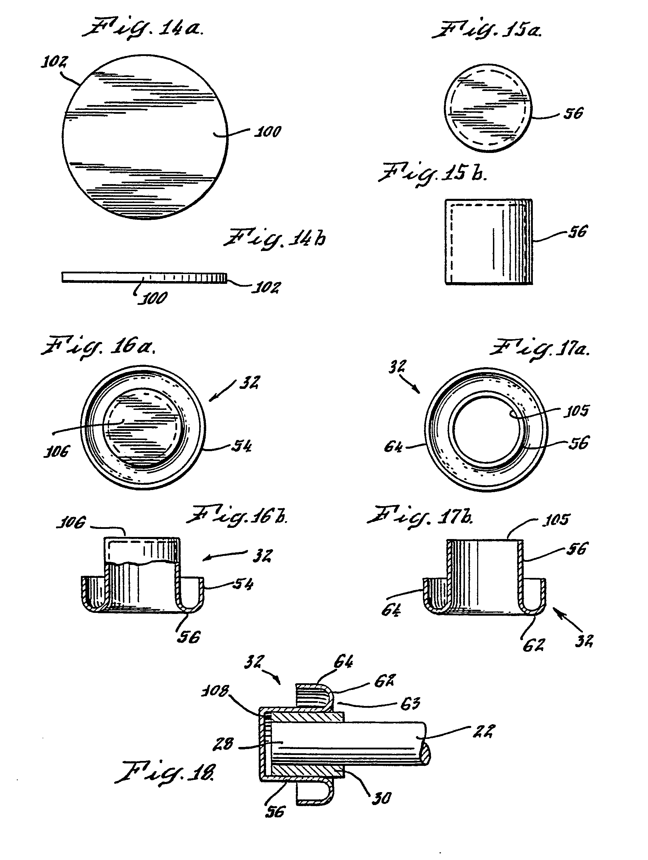

A means for captivating the support body 32 which is positioned in the cavity 72 is provided by a circular array of bosses 86 (Figs. 8 and 10) which are integrally formed with and extend from a segment 87 of the thermoplastic tubular segment 36. After placement of the support body 32 within the circular cavity 72, the two bosses 86 are formed. Each of the bosses extends for an arcuate distance of about 150° (Fig. 2) and are positioned longitudinally adjacent the shoulder segment 62 of the support body. The bosses 86 are formed by cold working the thermoplastic segment 87 to partially deform the segment 87 in a transverse direction. The deformed, transversely extending segments comprise the bosses 86. Bosses 86 alternatively comprise a circular array of a plurality of bosses or alternatively boss 86 comprises a continuous ring shaped boss having a notch formed therein along its circumference. The bosses 86 extend over a part of the surface of the collar segment 62 and captivate the support body 32 in the tubular segment 36. Fig. 11 is a sectional view of a boss 86 after placement of the support body 32 in the cavity 72 and prior to deforming by cold working. After cold working, the deformed bosses 86 engage the outer, upper surface of the shoulder segment 62 and captivate the support body 32 in the tubular segment 36. Figs. 8 and 10 illustrate engagement between a deformed boss 86 and the surface of the shoulder segment 62. Fig. 2 illustrates the deformed array of bosses 86.

A means is provided for inhibiting rotation of the support body 32 in the tubular segment 36. This means comprises a protrusion extending from the support body which engages a surface of the tubular housing segment 36 and inhibits rotation. In a preferred embodiment, the means for inhibiting rotation comprises a protrusion extending transversely from the collar segment 64. Referring now to Figs. 4, 5, 8 and 9, a protrusion is shown to comprise a wedge shaped boss 90 which extends transversely inwardly from the collar segment 64. Preferably, a plurality of such protrusions are provided as is illustrated by the wedge shaped protrusions 90, 92 and 94 in Fig. 4. These protrusions which are integral with the collar segment 64 are conveniently formed during the forming operation upon formation of the disk 100, referred to hereinbefore. The wedge shaped bosses 90, 92 and 94 engage the rib segment 80 upon placement of the body 32 in the cavity 72. Placement of the body 32 causes deformation of the thermoplastic material and causes the rib segment to assume the shape of the boss as is best illustrated in Figs. 8 and 9. The deformed thermoplastic material thus engages the protrusions and inhibits rotation of the body 32 about its axis 60 within the cavity 72.

Protrusions for inhibiting rotation of the support body 32 may take forms and configurations other than those shown in Fig. 4. Depending on the particular application, the protrusions for example may be formed in the central segment 56 along its length or even along an edge of the central segment 56 when these surfaces are juxtaposed with a surface of the housing. Fig. 7 illustrates an alternative protrusion arrangement wherein the protrusion comprises a dimpled or curve shaped boss 96 extending transversely and outwardly from the axis 60 of the body. Fig. 10 illustrates the placement and deformation of the wall of the tubular segment 36 by a support body 32 having a protrusion of Fig. 7. A restraining groove 109 (Fig. 10) is formed in the wall 77 during placement.

An alternative arrangement for the support body 32 is illustrated in Fig. 18. In this arrangement, an aperture is not formed in a central segment 56 and the closure 106 is provided at one end of the segment. The support body 32 in this arrangement is fabricated by the steps illustrated in Figs. 14, 15 and 16. The bearing body placed in the segment 56 is positioned so that a distal end 108 of the bearing 30 is spaced from the closure 106 of the central segment. This arrangement is advantageous for use with armature shafts which do not extend fully through the support body. The spacing between the end closure 106 and the distal segment 108 of the bearing is advantageous in that a lubricant deposited therein is captivated and provides for long term lubrication of the bearing as described.

In an alternative embodiment of the support body of the invention a means is provided for enabling air flow through the support body itself. This means comprises an aperture formed in the body 32. Preferably, a plurality of the apertures are formed as is illustrated in Figs. 12 and 13 by a circular array of apertures 98 formed in the shoulder segment 62. These apertures enable the flow of air through the support body itself and increase the contact of cooling air with the surfaces of the support body 32 thus enhancing cooling. The edges of these apertures which need not be accurately formed since their function is simply to provide an air passage can be formed during the fabrication process referred to hereinbefore.

There has thus been described an improved heat sink support arrangement for supporting a rotating armature shaft in an electrically actuated device. The heat sink support body described is advantageous in that it can be fabricated at reduced cost in terms of the quantity of material required as well as economy of fabricating processes utilized in forming the support body. While providing the desired rigidity for supporting the bearing and the armature shaft in the housing of the device, the support body which is formed of a thin walled material provides ductility thereby facilitating placement of its bearing body in the support body. The described arrangement provides a surface area exposed to a flowing air medium which maintains the bearing at a desired operating temperature. Further features of the invention provide means for inhibiting rotation of the support body when mounted in the housing for the device and enhancing cooling by forming apertures in the support body.

## Claims

1. An electrically actuated device, particularly a portable power tool, having an electric motor (18), the armature shaft (22) of the electric motor being journalled at one end (28) in a bearing (30) supported in a single piece support body (32) made from sheet metal and having integrally formed central (56), shoulder (62) and collar (64) segments, the collar (64) and central (56) segments extending longitudinally parallel to and concentrically about the axis (84) of the armature shaft with the collar segment (64) spaced radially outwardly from the central segment (56) and the shoulder segment (62) extending transversely to said axis (84) and connecting the ends of the central and collar segments which are closest to the armature, said bearing (30) being received in said central segment (56), characterized in that said device has a thermoplastic housing (12) having internally thereof and integrally therewith a tubular bridge segment (36) concentric with said axis (84), said tubular bridge segment (36) including a radially inwardly extending flange (78) with a rib segment (80) extending axially therefrom to define an annular cavity (72) internally of said tubular bridge segment (36) and concentric with said axis (84), said collar segment engaging in and being supported by said tubular bridge segment (36) with one end (74) of said collar segment (64) engaging in said annular cavity (72), and means (86) integral with and extending radially inwardly from said tubular bridge segment (36) in axially spaced relation from said annular cavity (72) for retaining said support body (32) in said tubular bridge segment (36), said support body (32) being retained between said annular cavity (72) and said retaining means (86), whereby said sheet metal support body (32) functions both to support said bearing (30) and as a heat sink therefor.

2. The electrically actuated device of Claim 1, characterized in that said retaining means comprises a plurality of bosses (86) cold worked from the thermoplastic material of said tubular bridge segment (36) and engaging said shoulder segment (62), whereby said bosses (86) retain said support body (32) in position after said one end (74) of said collar segment (64) has been engaged in said annular cavity (72).

3. The electrically actuated device of Claim 1 or 2, characterized in that said one end (74) of said collar (64) has radially extending protrusions (90; 96) deforming the thermoplastic material defining said annular cavity (72) to inhibit rotation of said support body (32) about said axis (84).

4. The electrically actuated device of Claim 1, 2 or 3, characterized in that said armature shaft (22) has a fan (42) mounted thereon, and said shoulder segment (62) has holes (98) therein, whereby cooling air is caused to pass through said holes (98) by said fan (42) to enhance cooling of said support body (32).

## Patentansprüche

1. Elektrisch betätigte Einrichtung, insbesondere tragbares Elektrowerkzeug, mit einem Elektromotor (18), dessen Ankerwelle (22) an einem Ende (28) in einem Lager (30) gelagert ist, das in einem einteiligen Haltekörper (32) gehalten ist, der aus Blech hergestellt ist und einstückig ausgebildete Mittel (56)-, Schulter (62)- und Rand (64)-Abschnitte aufweist, wobei sich die Rand (64)-und Mittel (56)- Abschnitte in Längsrichtung parallel zu und konzentrisch um die Achse (84) der Ankerwelle erstrecken und der Rand-Abschnitt (64) radial weiter außen liegt als der Mittel-Abschnitt (56) und er Schulter-Abschnitt (62) sich quer zur Achse (84) erstreckt und die Enden der Mittel- sowie der Rand-Abschnitte, die dem Anker am nächsten sind, verbinden, wobei das Lager (30) im Mittel- Abschnitt (56) aufgenommen wird, dadurch gekennzeichnet, daß die Einrichtung ein thermoplastisches Gehäuse (12) mit einem inneren und einstückig ausgebildeten, rohrförmigen Brückenabschnitt (36) konzentrisch zur Achse (84) hat, wobei der rohrförmige Brückenabschnitt (36) einen sich radial nach innen erstreckenden Flansch (78) mit einem Rippenabschnitt (80) aufweist, der sich axial von diesem erstreckt, um einen ringförmigen Hohlraum (72) im Inneren des rohrförmigen Brückenabschnittes (36) und konzentrisch zur Achse (84) zu bilden, wobei der Rand- Abschnitt in Eingriff mit dem rohrförmigen Brückenabschnitt (36) steht und von ihm getragen wird und ein Ende (74) des Rand-Abschnittes (64) in Eingriff mit dem ringförmigen Hohlraum (72) steht, sowie mit einstückig mit dem rohrförmigen Brückenabschnitt (36) ausgebildeten und sich von diesem in axialem Abstand vom ringförmigen Hohlraum (72) radial nach innen erstreckenden Mitteln (86) zum Halten des Haltekörpers (32) im rohrförmigen Brückenabschnitt (36), wobei die Haltekörper (32) zwischen dem ringförmigen Hohlraum (72) und den Haltemitteln (86) gehalten ist, so daß der aus Blech bestehende Haltekörper (32) sowohl zur Halterung des Lagers (30) als auch als als Kühlblech für dieses dient.

2. Elektrisch betätigte Einrichtung nach Anspruch 1, dadurch gekennzeichnet, daß die Haltemittel mehrere durch Kaltbearbeitung aus dem thermoplastischem Material des rohrförmigen Brückensegmentes (36) ausgearbeitete Ansätze (86) haben, die in Eingriff mit dem Schulter-Abschnitt (62) stehen, so daß die Ansätze (86) den Haltekörper (32) in seiner Lage halten, nachdem das eine Ende (74) des Rand-Abschnittes (64) in Eingriff mit dem ringförmigen Hohlraum (72) gebracht wurde.

3. Elektrisch betätigte Einrichtung nach Anspruch 1 oder 2, dadurch gekennzeichnet, daß das eine Ende (74) des Randes (64) sich radial erstreckende Vorsprünge (90; 96) hat, die das den ringförmigen Hohlraum (72) bildende, thermoplastische Material verformen, um eine Drehung des Haltekörpers (32) um die Achse (84) zu verhindern.

4. Elektrisch betätigte Einrichtung nach Anspruch 1, 2 oder 3, dadurch gekennzeichnet, daß auf der Ankerwelle (22) ein Lüfterrad (42) befestigt ist und der Schulter-Abschnitt (62) Löcher (98) aufweist, so daß die Kühlluft vom Lüfterrad (42) durch die Löcher (98) geleitet wird, um die Kühlung des Haltekörpers (32) zu verstärken.

## Revendications

1. Un dispositif actionné électriquement, et particulièrement un outil portatif électrique, ayant un moteur électrique (18), l'axe d'induit (22) du moteur électrique tourillonnant à une extrémité (28) dans un palier (30) supporté par un corps de support en une seule pièce (32) et fait de tôle métallique et ayant des segments dont un segment central (56), un segment d'épaulement (62) et un segment de col (64) qui en font partie intégrante, les segments de col (64) et central (56) s'étendant longitudinalement parallèlement et concentriquement à l'axe (84) (autour de ce dernier) de l'arbre d'induit, le segment de col (64) étant espacé radialement vers l'extérieur du segment central (56) et le segment d'épaulement (62) s'étendant transversalement par rapport audit axe (84) et reliant les extrémités des segments central et de col qui sont les plus rapprochées de l'induit, ledit palier (30) étant reçu dans ledit segment central (56), caractérisé en ce que ledit dispositif a un carter thermoplastique (12) dans l'intérieur duquel et en faisant partie intégrante se trouve un segment de liaison tubulaire (36) concentrique audit axe (84) comprenant un flasque (78) s'étendant radialement vers l'intérieur avec un segment à nervure (80) s'étendant axialement depuis ce dernier pour délimiter une cavité annulaire (72) à l'intérieur dudit segment de liaison tubulaire (36) et, concentrique audit axe (84) ledit segment de col s'engageant dans ledit segment de liaison tubulaire (36) dans lequel il est supporté, avec une extrémité (74) dudit segment de col (64) s'engageant dans ladite cavité annulaire (72) et un moyen (86) faisant partie intégrante dudit segment de liaison tubulaire (36) d'où il s'étend radialement vers l'intérieur, séparé par un certain espace axial de ladite cavité annulaire (72) pour maintenir prisonnier ledit corps de support (32) dans ledit segment de liaison tubulaire (36), ledit corps de support (32) étant retenu entre ladite cavité annulaire (72) et ledit moyen de maintien (86), de sorte que ledit corps de support en tôle métallique (32) remplit à la fois la fonction de support dudit palier (30) et celle de dissipateur thermique.

2. Le dispositif actionné électriquement de la revendication 1 caractérisé en ce que ledit moyen de maintien comprend un certain nombre de bossages (86) façonnés à froid à partir de la matière thermoplastique dudit segment de liaison tubulaire (36) et s'engageant dans ledit segment d'épaulement (62), de sorte que lesdits bossages (86) retiennent ledit corps de support (32) en position après que ladite extrémité (74) dudit segment de col (64) ait été engagée dans ladite cavité annulaire (72).

3. Le dispositif actionné électriquement des revendications 1 ou 2 caractérisé en ce que ladite première extrémité (74) dudit col (64) a des saillies s'étendant radialement (90, 96) déformant la matière thermoplastique délimitant ladite cavité annulaire (72) pour rendre impossible la rotation dudit corps de support (32) autour dudit axe (84).

4. Le dispositif actionné électriquement de la revendication 1, 2 ou 3, caractérisé en ce que ledit axe d'induit (22) porte un ventilateur (42) et que ledit segment d'épaulement (62) présente des trous (98) qui y sont pratiqués, ce qui permet à l'air de refroidissement de passer à travers lesdits trous (98) sous l'action dudit ventilateur (42) pour améliorer le refroidissement dudit corps de support (32).

**0 052 970**

Fig.1.

Fig.2.

Fig.3.

1

Fig. 12.

Fig. 13.

Fig. 6.

Fig. 4.

Fig. 5.

Fig. 7.

Fig. 8.

Fig. 9.

Fig. 10.

Fig. 11.

Fig. 14a.

Fig. 15a.

Fig. 14b

Fig. 15 b.

Fig. 16a.

Fig. 17a.

Fig. 16b.

Fig. 17b.

Fig. 18.